# EUROPEAN PATENT SPECIFICATION

(11) **EP 1 472 470 B1**
(45) Date of publication and mention of the grant of the patent: **19.04.2006**
(21) Application number: 03704757.8
(22) Date of filing: 04.02.2003
(51) Int. Cl.: F16D 65/12, F16D 65/847, B22C 9/10

(54) **CAST BRAKE DISC**
GEGOSSENE BREMSSCHEIBE
DISQUE DE FREIN COULE

(30) Priority: 05.02.2002 GB 0202620
(43) Date of publication of application: 03.11.2004
(73) Proprietor: Meritor Heavy Vehicle Braking Systems (UK) Limited, Cwmbran, Gwent NP44 3XU (GB)
(72) Inventor: KERSLAKE GIBBENS, Peter, Newport NP16 4LU (GB)
(74) Representative: Jones, John Bryn
(86) International application number: PCT/GB2003/000468
(87) International publication number: WO 2003/067112

(56) References cited:
- EP-A- 0 143 264
- EP-A- 1 122 456
- DE-A- 3 924 849

## Description

The present invention relates to a cast brake disc and a method of making a bare casting for a cast brake disc.

Cast brake discs comprising a mounting flange connected to an annular disc by a rotor bell are known. Typically the rotor bell will have an annular cast recess and the mounting flange will also have a central cast hole. The rotor bell recess and flange hole are provided by the use of a casting core.

Furthermore it is known to provide the annular disc with ventilation holes. Various ventilation patterns can be used and again typically these are provided by a further casting core.

Thus the known method of providing a cast ventilated brake disc is to provide a bottom (first) casting mould, position the rotor bell recess and flange hole core in the mould, position the (separate) disc ventilation hole core in the mould, close the mould with a top (second) casting mould and then pour the casting. Under such circumstances, the mould has a horizontal split line.

In particular because two separate cores are used, they have to be individually supported in the mould and the support arrangement takes up mould space. Furthermore, in order to evenly support both cores, the brake disc is cast horizontally, i.e. with the plane of the annular disc being horizontal.

This results in cores which take up a considerable amount of casting box space. Furthermore, because the first and second cores have to be positioned in the mould separately, then close tolerances cannot be achieved. Thus the casting has to be designed oversize such that subsequent machining can achieve correct tolerances. Clearly this results in a wastage of casting material and also excessive machining costs.

The use of a single casting core is disclosed in document EP-A-0764486.

According to the present invention there is provided a method of making a bare casting for a cast brake disc as defined in the accompanying independent claims.

The invention will now be described, by way of example only, with reference to the accompanying drawings, in which:-
Figure 1 is a cross section of a cast brake disc according to the present invention,
Figure 2 is a view of the cast brake disc of figure 1 taken in the direction of arrow A,
Figure 3 is a cross section of the cast brake disc of figure 1 showing the casting core and mould,
Figure 3A shows the casting core of figure 3 in isolation, and
Figures 4 to 9 are further cross section views of cast brake discs according to the present invention.

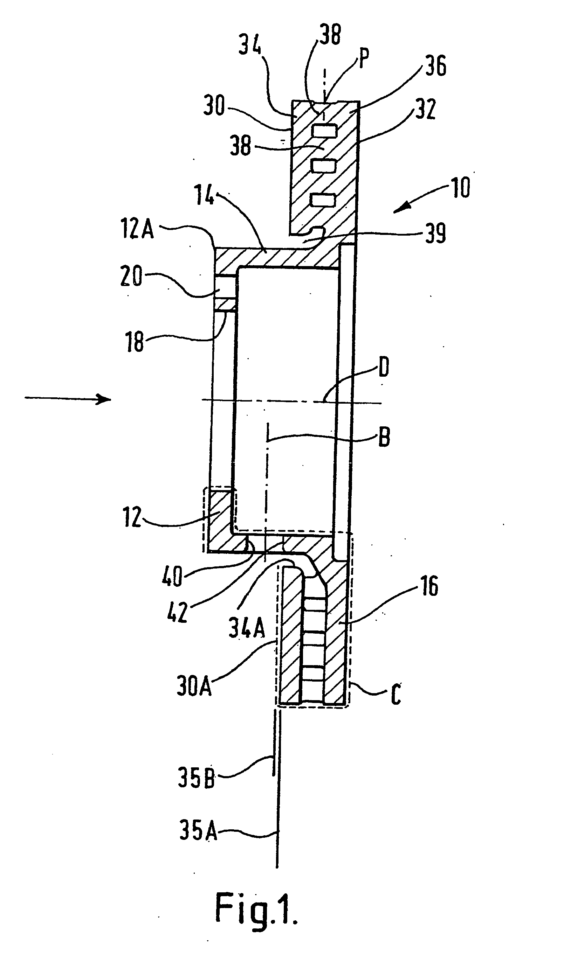

With reference to figures 1 to 3A there is shown a cast bralce disc 10 having a mounting flange 12, a rotor bell 14 and an annular disc 16.

The mounting flange includes a cast central hole 18 and mounting holes 20. The flange further includes threaded demounting holes 22.

The annular disc 16 defines a plane P and includes a first (outboard) braking face 30, proximate the mounting flange 12 and a second (inboard) braking face 32.

The first braking face 30 is provided on an outboard cheek 34 and the second braking face is provided on an inboard cheek 36.

The first braking face 30 defines a first braking face plane 35A.

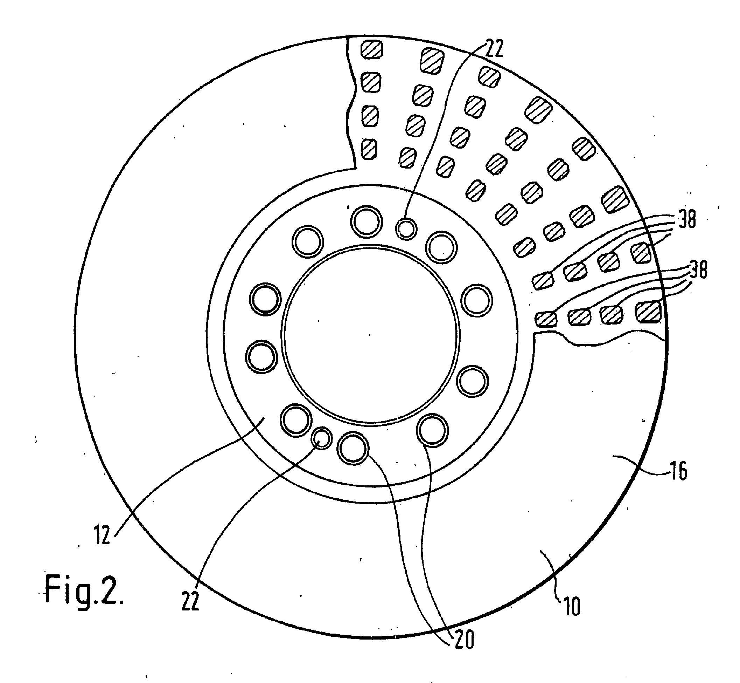

The outboard and inboard cheeks are connected via ventilation vanes 38. In this case four radially aligned discreet vanes are provided as a set, the set being repeated at circumferential intervals around the disc brake, as best seen in figure 2.

In further examples different vane patterns can be used.

In particular it should be noted that outboard cheek 34 has a continuous radially inner edge 34A, radially spaced from an adjacent portion of the rotor bell 14 which provides a continuous annular ventilation gap 39.

The rotor bell 14 is substantially cylindrical in shape and includes 3 radially orientated cast holes 40 (only one of which is shown). The holes are positioned circumferentially at 120° to each other. Each hole is circular and is nominally 25mm in diameter. The axis of the hole is shown at B. It can be seen that an inner edge 42 of the hole 40 is substantially aligned with the first (outboard) braking face 30 with the axis B being positioned on the mounting flange (12) side of this edge 42.

Note that the chain dotted line C defines the bare casting profile of the disc prior to final machining. In particular, the first braking face 30 has a premachined surface 30A which defines a first cast braking plane 35B. In use, the disc rotates about axis D.

The bare casting for the cast brake disc 10 is made as follows.

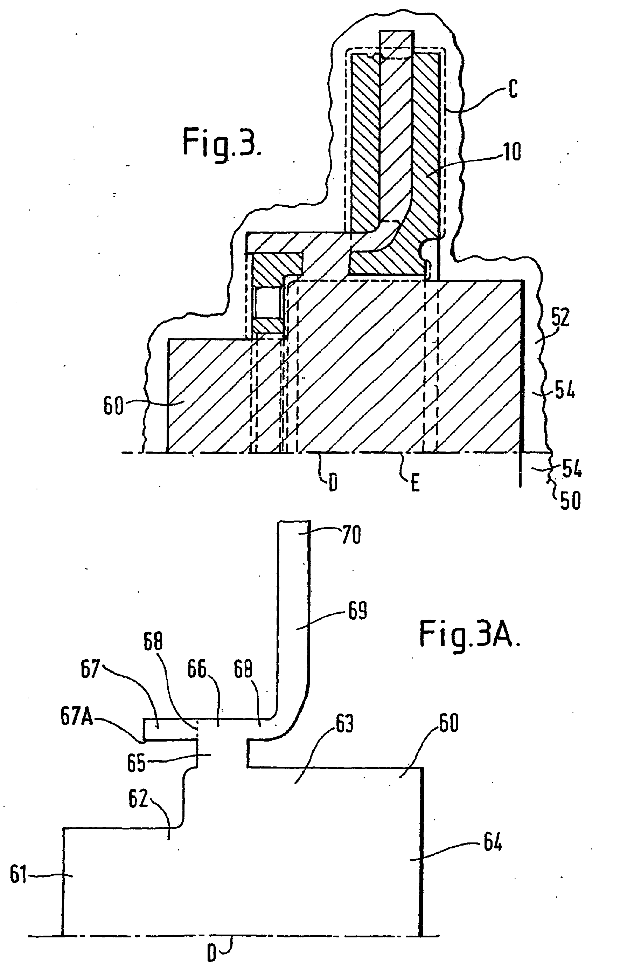

Figure 3 shows a first (bottom) casting mould 50 (only part shown) and a second (upper) casting mould 52.

The casting moulds typically comprises a casting box (not shown) partially filled with casting sand 54 into which the impression of a casting pattern has been impressed. The casting box split line is horizontal and is shown at E which, in this case, is coincident with the rotational axis D of the disc 10.

A single casting core 60 is positioned in the casting mould.

Figure 3A best shows the casting core 60 which comprises support portions 61, 64 and 70 which engage the casting sand to support the casting core in the mould. Support portions 61, 64 and 70 are annular.

Portion 62 provides the cast mounting flange central hole, and is annular.

Portion 63 provides the rotor bell axial recess, and is annular.

Portion 68 provides the annular ventilation gap 39 and is annular.

Portion 69 provides the ventilation holes and its shape can best be understood by consideration of figure 2.

Portion 65 provides one of the three radially orientated cast holes 40. Two further portions similar to portion 65 are provided circumferentially spaced at 120° from portion 65 to provide the other two radially orientated cast holes.

Portion 66 is annular and circumferentially connects the three radially orientated cast hole portions 65. In particular by providing portion 66 the core can be placed in the mould in any rotational orientation when considering axis D, i.e. the rotational position of the radially orientated cast hole portions 65 within the mould can be random.

Portion 67 provides an annular projection connected to portion 66. The left hand end of portion 67 surrounds the mounting flange 12 and edge 67A of the core substantially aligns with edge 12A of the mounting flange. Thus, any casting flash is conveniently located on a corner of the finished casting and is therefore easily removable.

However, in an alternative embodiment portion 67 may be absent from the core which would then terminate at the dotted line 68 shown in figure 3A. Thus, by removal of portion 67, the mould for the core no longer has to accommodate a draft angle on portion 67.

It should be noted that since the split line E is horizontal, then the plane P of the annular disc is situated vertically within the mould. Thus when using standard moulding boxes, it is possible to cast three discs in one moulding box whereas previously when the discs were cast horizontally, only two discs per casting box were possible.

One of the significant costs of casting is the casting sand itself, and in particular the cleaning of the casting sand once used.

Use of the present invention firstly allows less casting sand to be used per casting box (since it is possible to cast three discs rather than two) and additionally less casting sand is required to be cleaned per disc cast.

By positioning edge 42 of the radially orientated cast holes substantially in line with the first (outboard) braking face 30, the offset of portions 68, 69 and 70 of the core can be minimised whilst maintaining the integrity of the finished disc brake since it has been found that when a substantial part of the cast hole 40 lies radially within cheek 34A this causes locally increased thermal stresses as a result of heating of the annular disc 16 in use resulting in premature failure of the disc.

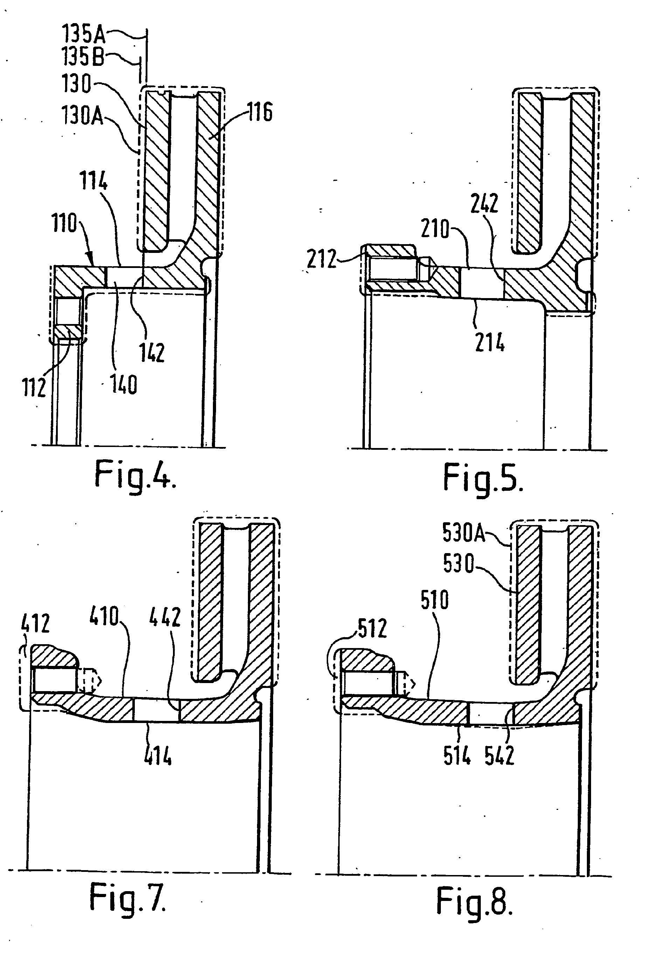

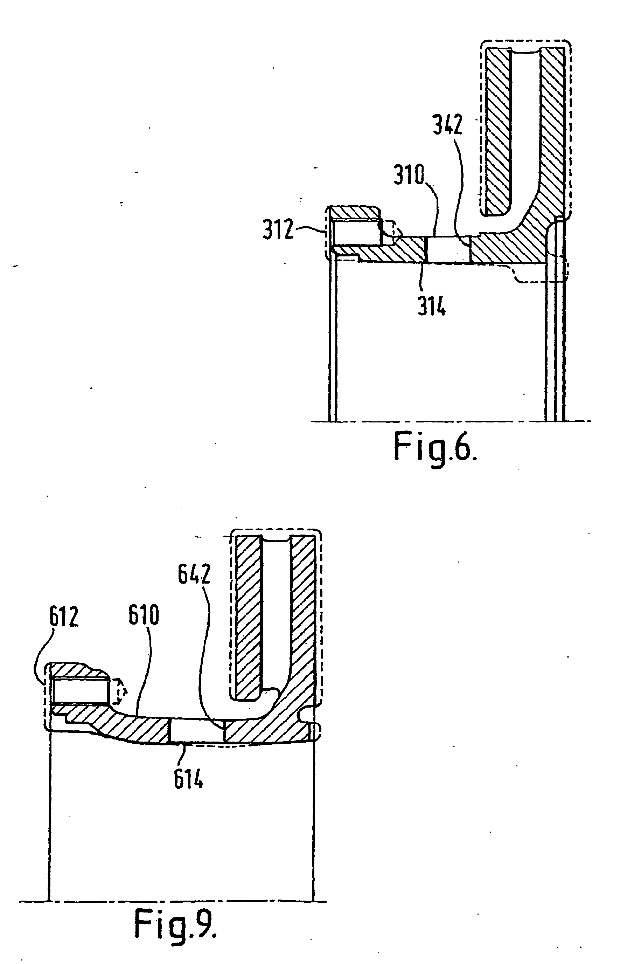

The figures 4 to 9 show further embodiments of a cast brake disc according to the present invention with features equivalent to cast brake disc 10 labelled 100, 200, 300, 400, 500 and 600 greater respectively.

It can be seen from figure 4 that edge 142 is substantially in line with plane 135A. Since plane 135A is defined by the finished machine surface of braking face 130, edge 142 is positioned to the right of first cast braking face 130A when viewing the figure. It can be seen from figure 8 that edge 542 is also substantially in line with the plane defined by first braking face 530.

Figures 5, 6, 7 and 9 show brake discs wherein the edges 242, 342, 442 and 642 are all positioned to the left of the associated first braking face, and also to the left of the associated first cast braking face. Such arrangements require a larger offset between those portions of the core that provide the cast holes (equivalent to portions 65 of figure 3A) and those portions of the core providing the ventilation holes (equivalent to portion 69 of figure 3A). Increasing the distance between these two regions of the core makes for a less stable core, but nevertheless can pay dividends in the finished article, in as much as locally induced thermal stresses beneath the outboard cheek, in use, can be reduced.

## Claims

1. A method of making a bare casting for a cast brake disc including the steps of
providing a first casting mould (50),
providing a second casting mould (52),
providing a single casting core (60) having a rotor bell axial recess portion (63) connected to an annular disc ventilation holes portion (69) via one or more radially orientated connecting portions (65),
mounting the core in the first casting mould,
closing the mould with the second casting mould
pouring the casting
allowing the casting to cool thereby defining a bare casting for a cast brake disc (10) having a mounting flange (12), a rotor bell (14), an angular disc (16) and one or more radially orientated cast holes defined by the one or more radially orientated connecting portions
removing the bare casting from the mould,
such that the annular disc (16) includes a first cast braking face (30A), defining a first cast braking face plane (35B), proximate the mounting flange (12) and a second cast braking face remote from the mounting flange, in which an edge of the radially orientated cast hole is substantially in line with the first cast braking face plane (35B) with the centre of the one or more radially orientated cast holes being positioned on the mounting flange side of said edge.

2. A method of making a bare casting for a cast brake disc including the steps of
providing a first casting mould (50),
providing a second casting mould (52),
providing a single casting core (60) having a rotor bell axial recess portion (63) connected to an annular disc ventilation holes portion (69) via one or more radially orientated connecting portions (65),
mounting the core in the first casting mould,
closing the mould with the second casting mould
pouring the casting
allowing the casting to cool thereby defining a bare casting for a cast brake disc (10) having a mounting flange (12), a rotor bell (14), an angular disc (16) and one or more radially orientated cast holes defined by the one or more radially orientated connecting portions
removing the bare casting from the mould,
such that the annular disc (16) includes a first cast braking face (30A), defining a first cast braking face plane (35B), proximate the mounting flange (12) and a second cast braking face remote from the mounting flange, in which no part of the one or more radially orientated cast holes are provided on the second cast braking face side of the first cast braking face plane (35B).

3. A method of making a bare casting as defined in any preceding claim in which the annular disc ventilation holes portion define a plane wherein the core is mounted in the first casting mould such that the said plane is vertical.

4. A method of making a bare casting as defined in claim 3 in which the first casting mould and the second casting mould have a horizontal split line.

5. A method of making a bare casting as defined in any preceding claim in which the annular disc ventilation holes portion of the core has a continuous annular ventilation gap portion at a radially innermost edge.

6. A method of making a bare casting as defined in any preceding claim in which the core includes a continuous annular portion surrounding the or each radially orientated connecting portion.

7. A method of making a bare casting as defined in claim 6 in which the core includes an annular projection connected to the continuous annular portion which faces away from the first cast braking face.

8. A method of making a bare casting as defined in claim 7 in which the annular projection surrounds the mounting flange of the bare casting.

9. A method of making a bare casting as defined in any preceding claim in which the one or more radially orientated cast holes are circular.

10. A method of making a bare casting as defined in any preceding claim in which there are three radially orientated cast holes.

## Patentansprüche

1. Verfahren zur Herstellung eines blanken Gussteils für eine Gussbremsscheibe mit den folgenden Schritten:
Bereitstellen einer ersten Gießform (50),
Bereitstellen einer zweiten Gießform (52),
Bereitstellen eines einzigen Gusskerns (60) mit einem axialen Läuferkappenausnehmungsabschnitt (63), der über ein oder mehr radial ausgerichtete Verbindungsabschnitte (65) mit einem ringförmigen Scheibenlüftungslöcherabschnitt (69) verbunden ist,
Anbringen des Kerns in der ersten Gießform,
Schließen der Form mit der zweiten Gießform,
Gießen des Gussteils,
Abkühlen lassen des Gussteils, wodurch ein blankes Gussteil für eine Gussscheibenbremse (10) gebildet wird, das einen Befestigungsflansch (12), eine Läuferkappe (14), eine winkelige Scheibe (16) und ein oder mehr radial ausgerichtete Gusslöcher aufweist, die durch die ein oder mehr radial ausgerichteten Verbindungsabschnitte definiert werden,
Entnehmen des blanken Gussteils aus der Form, so dass die ringförmige Scheibe (16) eine erste Gussbremsfläche (30A), die eine erste Gussbremsflächenebene (35B) definiert, in der Nähe des Befestigungsflansches (12) und eine zweite Gussbremsfläche entfernt von dem Befestigungsflansch aufweist, bei der ein Rand des radial ausgerichteten Gusslochs im Wesentlichen parallel zu der ersten Gussbremsflächenebene (35B) ist, wobei der Mittelpunkt der ein oder mehr radial ausgerichteten Gusslöcher jeweils auf der dem Befestigungsflansch zugewandten Seite des Randes liegt.

2. Verfahren zur Herstellung eines blanken Gussteils für eine Gussscheibenbremse mit den folgenden Schritten:
Bereitstellen einer ersten Gießform (50),
Bereitstellen einer zweiten Gießform (52),
Bereitstellen eines einzigen Gusskerns (60) mit einem axialen Läuferkappenausnehmungsabschnitt (63), der über ein oder mehr radial ausgerichtete Verbindungsabschnitte (65) mit einem ringförmigen Scheibenlüftungslöcherabschnitt (69) verbunden ist,
Anbringen des Kerns in der ersten Gießform,
Schließen der Form mit der zweiten Gießform,
Gießen des Gussteils,
Abkühlen lassen des Gussteils, wodurch ein blankes Gussteil für eine Gussscheibenbremse (10) gebildet wird, das einen Befestigungsflansch (12), eine Läuferkappe (14), eine winkelige Scheibe (16) und ein oder mehr radial ausgerichtete Gusslöcher aufweist, die durch die ein oder mehr radial ausgerichteten Verbindungsabschnitte definiert werden,
Entnehmen des blanken Gussteils aus der Form, so dass die ringförmige Scheibe (16) eine erste Gussbremsfläche (30A), die eine erste Gussbremsflächenebene (35B) definiert, in der Nähe des Befestigungsflansches (12) und eine zweite Gussbremsfläche entfernt von dem Befestigungsflansch aufweist, bei der kein Teil der ein oder mehr radial ausgerichteten Gusslöcher auf der der zweiten Gussbremsfläche zugewandten Seite der ersten Gussbremsflächenebene (35B) vorgesehen ist.

3. Verfahren zur Herstellung eines blanken Gussteils nach einem der vorhergehenden Ansprüche, bei dem der ringförmige Scheibenlüftungslöcherabschnitt eine Ebene definiert, wobei der Kern in der ersten Gießform so angebracht ist, dass diese Ebene vertikal ist.

4. Verfahren zur Herstellung eines blanken Gussteils nach Anspruch 3, bei dem die erste Gießform und die zweite Gießform eine horizontale Trennlinie aufweisen.

5. Verfahren zur Herstellung eines blanken Gussteils nach einem der vorhergehenden Ansprüche, bei dem der ringförmige Scheibenlüftungslöcherabschnitt des Kerns an einem radial innersten Rand einen durchgehenden ringförmigen Lüftungsspaltabschnitt aufweist.

6. Verfahren zur Herstellung eines blanken Gussteils nach einem der vorhergehenden Ansprüche, bei dem der Kern einen durchgehenden ringförmigen Abschnitt um den bzw. jeden radial ausgerichteten Verbindungsabschnitt herum aufweist.

7. Verfahren zur Herstellung eines blanken Gussteils nach Anspruch 6, bei dem der Kern einen mit dem durchgehenden ringförmigen Abschnitt verbundenen ringförmigen Vorsprung aufweist, der von der ersten Gussbremsfläche abgewandt ist.

8. Verfahren zur Herstellung eines blanken Gussteils nach Anspruch 7, bei dem der ringförmige Vorsprung den Befestigungsflansch des blanken Gussteils umschließt.

9. Verfahren zur Herstellung eines blanken Gussteils nach einem der vorhergehenden Ansprüche, bei dem die ein oder mehr radial ausgerichteten Gusslöcher kreisrund sind.

10. Verfahren zur Herstellung eines blanken Gussteils nach einem der vorhergehenden Ansprüche, bei dem es drei radial ausgerichtete Gusslöcher gibt.

## Revendications

1. Un procédé de fabrication d'un moulage brut pour un disque de frein coulé, comprenant les étapes consistant à :
- fournir un premier moule de coulée (50),
- fournir un deuxième moule de coulée (52),
- fournir un noyau de coulée (60) unique, ayant une partie creusée axiale (63) en forme de cloche de rotor reliée à une partie à trous de ventilation de disque (69) annulaire, via une ou plusieurs parties de liaison (65) orientées radialement,
- monter le noyau dans le premier moule de coulée,
- fermer le moule par le deuxième moule de coulée,
- verser la masse fondue,
- refroidir le moulage de manière à définir un moulage brut pour un disque de frein coulé (10) ayant une bride de montage (12), une cloche de rotor (14), un disque annulaire (16) et un ou plusieurs trous de coulée orientés radialement, définis par les une ou plus parties de liaison orientées radialement,
- enlever le moulage brut du moule,
de manière que le disque annulaire (16) comprenne une première face de freinage coulée (30A) définissant une premier plan de face de freinage coulée (35B), proche de la bride de montage (12), et une deuxième face de freinage coulée, distante de la bride de montage, dans laquelle un bord du trou de coulée orienté radialement est sensiblement aligné avec le premier plan de face de freinage coulé (35B), le centre du un ou plus trous de coulée orientés radialement étant positionné sur le côté bride de montage dudit bord.

2. Un procédé de fabrication d'un moulage brut pour un disque de frein coulé comprenant les étapes consistant à :
- fournir un premier moule de coulée (50),
- fournir un deuxième moule de coulée (52),
- fournir un noyau de coulée (60) unique, ayant une partie creusée axiale (63) en forme de cloche de rotor reliée à une partie à trous de ventilation de disque (69) annulaire, via une ou plusieurs parties de liaison (65) orientées radialement,
- monter le noyau dans le premier moule de coulée,
- fermer le moule par le deuxième moule de coulée,
- verser la masse fondue,
- refroidir le moulage de manière à définir un moulage brut pour un disque de frein coulé (10) ayant une bride de montage (12), une cloche de rotor (14), un disque annulaire (16) et un ou plusieurs trous de coulée orientés radialement, définis par les une ou plus parties de liaison orientées radialement,
- enlever le moulage brut du moule,
de manière que le disque annulaire (16) comprenne une première face de freinage coulée (30A) définissant une premier plan de face de freinage coulée (35B), proche de la bride de montage (12), et une deuxième face de freinage coulée, distante de la bride de montage, dans laquelle aucune partie des un ou plus trous de coulée orientés radialement n'est prévue sur le côté de la deuxième face de freinage coulé du premier plan de face de freinage coulé (35B).

3. Un procédé de fabrication d'un moulage brut tel que défini à l'une quelconque des revendications précédentes, dans lequel la partie à trous de ventilation de disque annulaire définit un plan, dans lequel le noyau est monté dans le premier moule de coulée, de manière que ledit plan soit vertical.

4. Un procédé de fabrication d'un moulage brut tel que défini à la revendication 3, dans lequel le premier moule de coulée et le deuxième moule de coulée ont une ligne de division horizontale.

5. Un procédé de fabrication d'un moulage brut tel que défini à l'une quelconque des revendications précédentes, dans lequel la partie à trous de ventilation de disque annulaire du noyau comprend une partie d'intervalle de ventilation annulaire continue, sur un bord radialement le plus à l'intérieur.

6. Un procédé de fabrication d'un moulage brut tel que défini à l'une quelconque des revendications précédentes, dans lequel le noyau comprend une partie annulaire continue entourant le ou chaque partie de liaison orientée radialement.

7. Un procédé de fabrication d'un moulage brut tel que défini à la revendication 6, dans lequel le noyau comprend une saillie annulaire connectée à la partie annulaire continue, dirigée à l'opposée de la première face de freinage coulée.

8. Un procédé de fabrication d'un moulage brut tel que défini à la revendication 7, dans lequel la saillie annulaire entoure la bride de montage du moulage brut.

9. Un procédé de fabrication d'un moulage brut tel que défini à l'une quelconque des revendications précédentes, dans lequel les un ou plus trous de coulée orientés radialement sont circulaires.

10. Un procédé de fabrication d'un moulage brut tel que défini à l'une quelconque des revendications précédentes, dans lequel le nombre de trous de coulée orientés radialement est de trois.
